# FASCICULE DE BREVET EUROPEEN

(11) **EP 1 651 915 B1**
(45) Date de publication et mention de la délivrance du brevet: **11.11.2015**
(21) Numéro de dépôt: 04767908.9
(22) Date de dépôt: 21.07.2004
(51) Int. Cl.: F25J 3/04, F02C 3/28, F01K 23/06

(54) **PROCÉDÉ ET INSTALLATION D'ALIMENTATION D'UNE UNITÉ DE SÉPARATION D'AIR AU MOYEN D'UNE TURBINE A GAZ**
VERFAHREN UND SYSTEM ZUR VERSORGUNG EINER LUFTTRENNEINHEIT MITTELS EINER GASTURBINE
METHOD AND SYSTEM FOR SUPPLYING AN AIR SEPARATION UNIT BY MEANS OF A GAS TURBINE

(30) Priorité: 30.07.2003 FR 0350389
(43) Date de publication de la demande: 03.05.2006
(73) Titulaire: L'AIR LIQUIDE, Société Anonyme pour l'Etude et l'Exploitation des Procédés Georges Claude, 75007 Paris (FR)
(72) Inventeur: SAULNIER, Bernard, F-92250 La Garenne Colombes (FR)
(74) Mandataire: Mercey, Fiona Susan
(86) Numéro de dépôt international: PCT/FR2004/050347
(87) Numéro de publication internationale: WO 2005/012814

(56) Documents cités:
- EP-A- 1 043 557
- US-A- 3 731 495
- US-A- 4 557 735
- US-A- 5 317 862
- US-A- 5 410 869
- US-B1- 6 295 838
- PATENT ABSTRACTS OF JAPAN vol. 0070, no. 29 (M-191), 5 février 1983 (1983-02-05) -& JP 57 183529 A (HITACHI SEISAKUSHO KK), 11 novembre 1982 (1982-11-11)

## Description

La présente invention concerne un procédé et une installation d'alimentation d'une unité de séparation d'air au moyen d'une turbine à gaz.

L'invention concerne un procédé et un appareil selon les caractéristiques de la préambule des revendications 1 et 5 respectivement. Un tel procédé et appareil est connu de US 4557735.

De façon classique, une turbine à gaz comprend un compresseur, une chambre de combustion, ainsi qu'une turbine de détente, couplée au compresseur pour l'entraînement de ce dernier. Cette chambre de combustion reçoit un gaz de combustion, ainsi qu'une certaine quantité d'azote, destinée à abaisser la température de flamme dans cette chambre de combustion, ce qui permet de minimiser les rejets d'oxydes d'azote à l'atmosphère.

De façon connue, le gaz de combustion peut être obtenu par gazéification, à savoir par oxydation de produits carbonés, tels que du charbon ou bien encore des résidus pétroliers. Cette oxydation est réalisée dans une unité indépendante, dénommée gazéifieur.

De façon classique, il est possible d'associer cette turbine à gaz avec une unité de séparation d'air. Cette dernière, qui est habituellement une unité cryogénique comprenant au moins une colonne de distillation, permet de fournir, à partir d'air, au moins un courant gazeux constitué en majorité par un des gaz de l'air, notamment l'oxygène ou l'azote.

L'association de cette unité de séparation d'air avec la turbine à gaz consiste à tirer parti d'au moins un des deux courants gazeux précités. A cet effet, l'oxygène et l'azote produits dans l'unité de séparation d'air sont admis respectivement dans le gazéifieur et la chambre de combustion.

L'invention vise plus particulièrement la mise en oeuvre combinée d'une turbine à gaz et d'une unité de séparation d'air, dans laquelle l'air d'entrée, délivré à cette unité de séparation, est au moins en partie fourni par la turbine à gaz.

A cet effet, le circuit de refoulement du compresseur de cette turbine à gaz est mis en communication avec l'entrée de l'unité de séparation, en remplacement ou en complément d'un compresseur externe d'alimentation. Cet agencement est notamment décrit dans EP-A-0 568 431.

La fraction d'air provenant de la turbine à gaz, dont la température est supérieure à 350°C, doit être refroidie avant son admission à l'entrée de l'unité de séparation d'air. Par ailleurs, il est souhaitable que le courant gazeux d'azote résiduaire présente la température la plus élevée possible, lors de son admission dans la chambre de combustion.

Dans ces conditions, il a été proposé, par US-A-3731495, de mettre en relation d'échange thermique l'air provenant de la turbine à gaz, ainsi que le courant d'azote résiduaire, afin d'homogénéiser leurs températures respectives.

Cette solution connue présente cependant certains inconvénients.

En effet, le débit d'azote résiduaire, ainsi que le débit d'air provenant de la turbine à gaz, dépendent uniquement des caractéristiques de cette dernière, ainsi que de la composition du gaz combustible admis dans la chambre de combustion. Ces débits sont ainsi susceptibles de différer très sensiblement l'un de l'autre.

Ainsi, le débit d'air provenant de la turbine à gaz peut être particulièrement faible, de sorte qu'il ne permet pas de porter le courant d'azote résiduaire au-dessus de 200°C. Une telle température n'est pas acceptable, dans la mesure où cet azote résiduaire doit être admis dans la chambre de combustion à au moins 290°C.

L'invention se propose de pallier cet inconvénient.

A cet effet, elle a pour objet un procédé selon la revendication 1.

Selon d'autres caractéristiques de l'invention :
- on alimente en énergie cette chaudière, au moyen de la turbine à gaz.
- on renvoie vers l'entrée du premier échangeur, au moins une partie de la fraction liquide refroidie dans le second échangeur.
- on met en relation d'échange thermique, à contre-courant, la fraction liquide à réchauffer et la fraction d'air d'entrée provenant de la turbine à gaz, ainsi que la fraction liquide à refroidir et le courant gazeux enrichi en azote.

L'invention a également pour objet une installation selon la revendication 5.

Selon d'autres caractéristiques de l'invention :
- il est prévu des moyens d'alimentation en énergie, s'étendant entre la turbine à gaz et cette chaudière.
- les moyens d'amenée de la fraction liquide à réchauffer sont mis en communication avec les moyens d'évacuation de la fraction liquide refroidie.
- les échangeurs de chaleur sont de type à contre-courant.

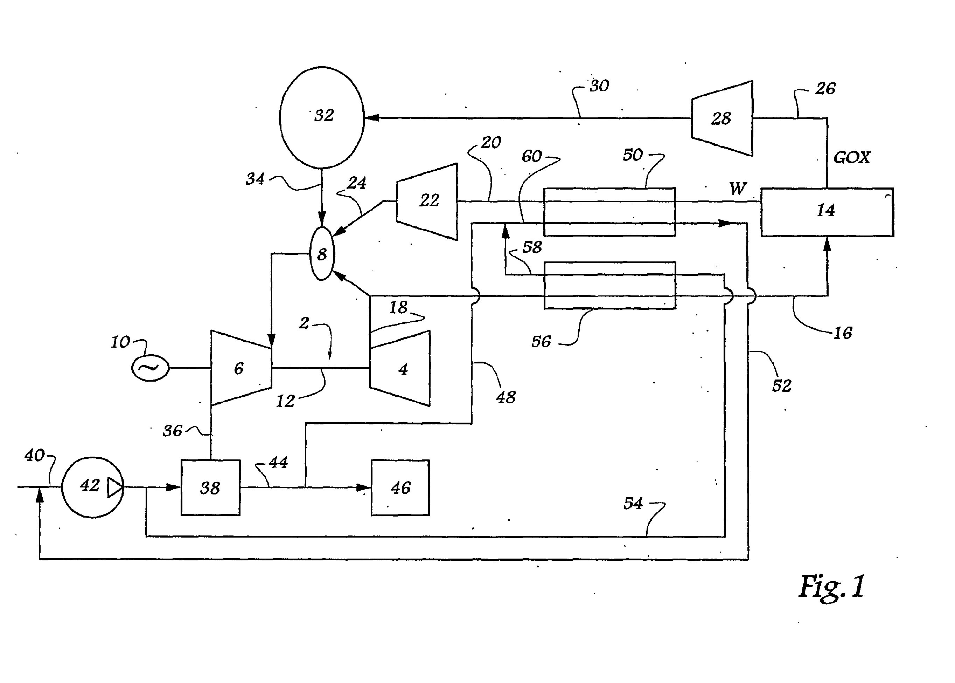

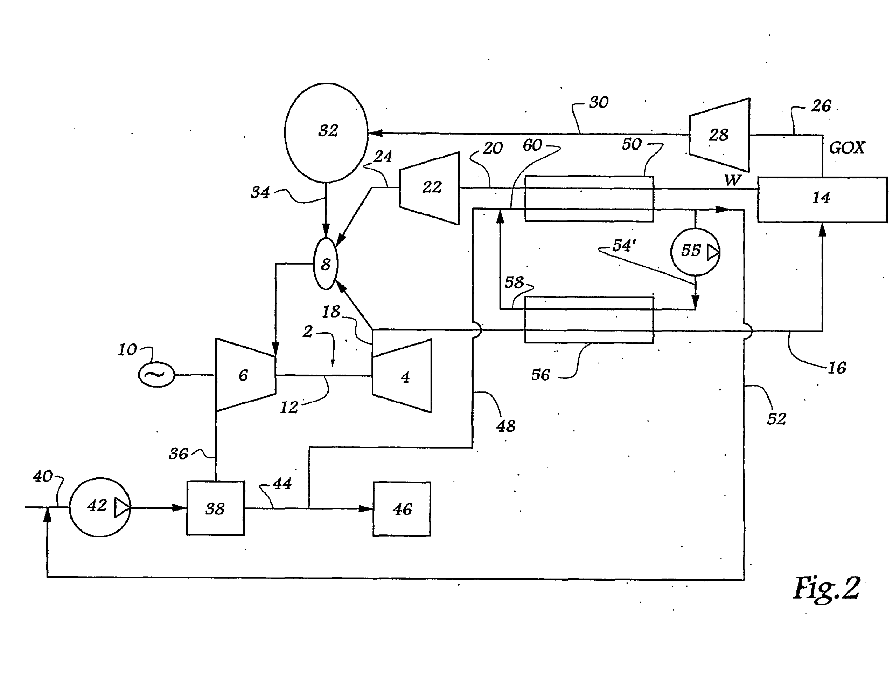

L'invention va être décrite ci-après, en référence aux dessins annexés donnés uniquement à titre d'exemple non limitatif, dans lesquels les figures 1 et 2 sont des vues schématiques illustrant des installations conformes à deux modes de réalisation de l'invention.

L'installation représentée aux figures 1 et 2 comprend une turbine à gaz, désignée dans son ensemble par la référence 2, qui comporte, de façon classique, un compresseur d'air 4, une turbine de détente 6, couplée au compresseur 4, ainsi qu'une chambre de combustion 8. Cette turbine à gaz 2 est également pourvue d'un alternateur 10, entraîné par un arbre 12, commun au compresseur 4 ainsi qu'à la turbine 6.

L'installation de la figure 1 comprend également une unité de séparation d'air, de type connu, désignée dans son ensemble par la référence 14. L'entrée de cette unité de séparation 14 est alimentée en air par une conduite 16, mise en communication avec le circuit de refoulement 18 du compresseur 4.

L'unité de séparation opère par cryogénie et comporte à cet effet plusieurs colonnes de distillation non représentées.

Une ligne 20 permet d'évacuer, hors de l'unité 14, un premier courant W d'azote résiduaire, contenant quelques % d'oxygène. Cette ligne 20 débouche dans un compresseur 22, en aval duquel s'étend une conduite 24, qui débouche dans la chambre de combustion 8.

Une conduite 26 permet l'évacuation, hors de l'unité 14, d'un courant gazeux GOX riche en oxygène. Cette conduite 26 débouche dans un compresseur 28, en aval duquel s'étend une ligne 30. Celle-ci débouche dans un gazéifieur 32, de type classique, qui est alimenté par un réservoir non représenté, contenant des produits carbonés, tels que du charbon.

Une ligne 34, qui s'étend en aval du gazéifieur 32, véhicule le gaz combustible issu de l'oxydation des produits carbonés précités. Cette ligne 34 est mise en communication avec la chambre de combustion 8 de la turbine à gaz.

La turbine de détente 6 de la turbine à gaz 2 est mise en relation, via une conduite 36, avec une chaudière 38 de récupération de la chaleur des fumées, détendues en sortie de cette turbine 6. Cette chaudière 38 reçoit, via une ligne 40 munie d'une pompe 42, de l'eau, qui est réchauffée dans cette chaudière et se trouve évacuée par une conduite 44. Cette dernière débouche dans une zone de génération de vapeur haute pression, de type classique, qui est désignée par la référence 46.

Une ligne 48, qui est piquée sur la conduite 44, débouche à l'entrée d'un échangeur de chaleur. Ce dernier reçoit par ailleurs la ligne 20 véhiculant l'azote résiduaire.

Une conduite 52, permettant d'évacuer l'eau amenée par la ligne 48, relie la sortie de l'échangeur 50 avec la ligne 40. Cette conduite 52 débouche dans cette ligne 40, en amont de la pompe 42.

Par ailleurs, une ligne 54 est piquée sur la ligne 40, en aval de la pompe 42. Cette ligne 54 est mise en communication avec l'entrée d'un échangeur 56, analogue à celui 50. Cet échangeur 56 reçoit par ailleurs la ligne 16, véhiculant la fraction d'air d'entrée provenant de la turbine à gaz 2.

Une conduite 58 relie par ailleurs la sortie de l'échangeur 56 avec la ligne 48, permettant l'amenée d'eau dans le premier échangeur 50. On note 60 l'extrémité de la ligne 48, s'étendant en aval du débouché de la conduite 58.

Le fonctionnement de l'installation ci-dessus va être décrit dans ce qui suit, en référence à la figure 1.

L'unité de séparation d'air 14 reçoit de l'air comprimé provenant du compresseur 4 et produit, de façon classique, deux courants gazeux, enrichis respectivement en azote et oxygène, qui sont véhiculés par la ligne 20 et la conduite 26.

Le courant gazeux enrichi en oxygène est admis dans le gazéifieur 32, qui reçoit par ailleurs des produits carbonés, tel du charbon. L'oxydation réalisée dans ce gazéifieur conduit à la production de gaz combustible, délivré par la conduite 34, qui alimente la chambre de combustion 8 de la turbine à gaz. Cette dernière reçoit en outre par la conduite 24, le courant gazeux W enrichi en azote, ainsi que, par la ligne 18, l'air comprimé provenant du compresseur 4.

Les gaz issus de la combustion correspondante, mélangés à l'azote résiduaire, sont envoyés vers l'admission de la turbine de détente 6, où ils se détendent en entraînant cette dernière. Ceci permet également, via l'arbre 12, l'entraînement du compresseur 4 ainsi que de l'alternateur 10, qui alimente par exemple un réseau de distribution électrique non représenté.

Les fumées détendues en sortie de la turbine 6 permettent de réchauffer, dans la chaudière 38, l'eau admise par la ligne 40. Ainsi, cette eau, dont la température est d'environ 100°C dans la ligne 40, se trouve portée à environ 300°C dans la conduite 44.

La ligne 54 dirige, vers l'entrée de l'échangeur 56, de l'eau à réchauffer, qui se trouve à environ 100°C. Cette dernière est mise en relation d'échange de chaleur avec la fraction d'air provenant de la turbine à gaz 2, qui est véhiculée par la ligne 16.

De l'eau réchauffée est alors évacuée de l'échangeur 56, par l'intermédiaire de la conduite 58. Cette eau réchauffée est alors mélangée à la fraction d'eau prélevées par la ligne 48, dont la température est d'environ 300°C.

Le mélange d'eau correspondant est admis à l'entrée de l'échangeur 50, via l'extrémité aval 60 de la ligne 48.

Cette eau à refroidir, véhiculée par l'extrémité 60, est alors mise en relation d'échange thermique avec le courant d'azote résiduaire, s'écoulant dans la ligne 20.

La conduite 52 renvoie ensuite, vers la ligne 40, une eau refroidie, dont la température est d'environ 100°C. Par ailleurs, l'azote résiduaire est évacué de l'échangeur 50, via la ligne 20, à une température permettant son admission dans la chambre de combustion 8 selon des conditions optimales.

Les débits respectifs d'eau réchauffée et d'eau de mélange, véhiculées respectivement par la conduite 58 et la ligne 48, sont tels qu'ils permettent de porter l'azote résiduaire à environ 290°C.

La figure 2 représente un second mode de réalisation de l'installation conforme à l'invention.

Cette variante diffère de l'installation représentée à la figure 1, en ce que l'eau à réchauffer n'est plus prélevée en amont de la chaudière 38. Ainsi, comme le montre la figure 2, l'eau à réchauffer est prélevée, via une ligne 54', à partir du courant d'eau refroidi, évacué de l'échangeur 50 via la ligne 52. La circulation de ce prélèvement d'eau est assurée par l'intermédiaire d'une pompe 55.

Le fonctionnement de l'installation illustrée sur cette figure 2 est analogue à celui de l'installation de la figure 1.

L'invention n'est pas limitée aux exemples décrits et représentés.

Ainsi, il est possible d'alimenter la chambre de combustion 8, en utilisant uniquement l'azote résiduaire produit par l'unité de séparation d'air. Dans cette optique, le gaz de combustion, qui est alors par exemple du gaz naturel, n'est pas réalisé à partir de l'oxygène formé dans l'unité de séparation 2.

Il est également envisageable d'alimenter seulement en partie l'unité de séparation 14 par l'intermédiaire de la turbine. Un compresseur indépendant est alors prévu, dont la sortie est mise en communication avec la conduite 16.

L'invention permet de réaliser les objectifs précédemment mentionnés.

Faire appel à deux fractions liquides distinctes permet de réchauffer l'azote résiduaire de façon optimale. En effet, cette solution permet, d'une part, de tirer parti de la chaleur cédée par l'air provenant de la turbine à gaz et, d'autre part, d'apporter la quantité de chaleur d'appoint tout juste nécessaire au réchauffement de l'azote résiduaire, en faisant varier le débit de la fraction liquide de mélange, véhiculée par la ligne 48.

L'invention permet d'utiliser également la chaleur récupérée dans la chaudière 38. Une telle solution, qui est avantageuse en termes énergétiques, fait intervenir des équipements simples et peu coûteux. En effet, cette chaudière est nécessairement voisine de la turbine à gaz, dans la mesure où elle se trouve alimentée par cette turbine.

## Revendications

1. Procédé d'alimentation d'une unité de séparation d'air (14) au moyen d'une turbine à gaz (2), dans lequel on admet (par 16) de l'air d'entrée dans une entrée de ladite unité de séparation (14), on fournit (par 16) au moins une fraction dudit air d'entrée à partir de ladite turbine à gaz (2), on extrait de l'unité de séparation (16) au moins un courant gazeux (par 20, 24) enrichi en azote, on réchauffe ce courant gazeux enrichi en azote, **caractérisé en ce que**, pour réchauffer le courant gazeux enrichi en azote, on met en relation d'échange thermique, dans un premier échangeur (56), la fraction d'air d'entrée provenant de la turbine à gaz (2) et une fraction d'eau à réchauffer (54 ; 54'), de manière à obtenir une fraction d'eau réchauffée (58), on ajoute cette fraction d'eau réchauffée (58) à une fraction d'eau de mélange (48), de manière à obtenir une fraction d'eau à refroidir (60), on met en relation d'échange thermique, dans un second échangeur (50), cette fraction d'eau à refroidir (60) et le courant gazeux enrichi en azote, on fournit au moins une partie de la fraction d'eau de mélange (48), à partir de la sortie d'une chaudière (38), on retourne, vers l'entrée de la chaudière (38), au moins une partie de la fraction d'eau (52) refroidie dans le second échangeur (50).

2. Procédé d'alimentation selon la revendication 1, **caractérisé en ce qu'**on alimente en énergie (par 36) cette chaudière (38), au moyen de la turbine à gaz (2).

3. Procédé d'alimentation selon la revendication 1, **caractérisé en ce qu'**on renvoie (par 54') vers l'entrée du premier échangeur (56), au moins une partie de la fraction liquide (52) refroidie dans le second échangeur (50).

4. Procédé d'alimentation selon l'une quelconque des revendications précédentes, **caractérisé en ce qu'**on met en relation d'échange thermique, à contre-courant, la fraction liquide à réchauffer (54 ; 54') et la fraction d'air d'entrée provenant de la turbine à gaz (2), ainsi que la fraction liquide à refroidir (60) et le courant gazeux enrichi en azote.

5. Installation d'alimentation d'une unité de séparation d'air (14) au moyen d'une turbine à gaz (2), comprenant une turbine à gaz (2) comportant des moyens de fourniture d'air comprimé, en particulier un compresseur (4), une unité de séparation d'air (14) comprenant des moyens d'alimentation (16) en air d'entrée comportant au moins des premiers moyens d'alimentation (16), en liaison avec les moyens de fourniture (4) de la turbine à gaz (2), ainsi que des moyens d'évacuation (20, 24) d'au moins un courant gazeux enrichi en azote, cette installation comprenant en outre des moyens de chauffage du courant gazeux enrichi en azote, **caractérisée en ce que** ces moyens de chauffage comprennent un premier échangeur de chaleur (56), dans lequel circulent les premiers moyens (16) d'alimentation en air d'entrée, des moyens d'amenée (54 ; 54') d'une fraction d'eau à réchauffer, débouchant à l'entrée du premier échangeur (56), des moyens d'évacuation (58) d'une fraction d'eau réchauffée, mis en communication avec la sortie du premier échangeur, un second échangeur de chaleur (50), dans lequel circulent les moyens d'évacuation (20, 24) du courant gazeux enrichi en azote, des moyens d'amenée (60) d'une fraction d'eau à refroidir, mis en communication avec l'entrée du second échangeur, et des moyens d'évacuation (52) d'une fraction d'eau refroidie, mis en communication avec la sortie du second échangeur (50), et **en ce que** les moyens d'évacuation (58) de la fraction liquide réchauffée sont mis en communication avec les moyens d'amenée (60) de la fraction liquide à refroidir, et **en ce que** les moyens d'amenée de la fraction liquide à refroidir (60) sont mis en communication avec une chaudière (38) et les moyens d'évacuation (52) de la fraction liquide refroidie sont mis en communication avec l'entrée de la chaudière (38).

6. Installation selon la revendication 5, **caractérisée en ce qu'**il est prévu des moyens (36) d'alimentation en énergie, s'étendant entre la turbine à gaz (2) et cette chaudière (38).

7. Installation selon la revendication 5, **caractérisée en ce que** les moyens d'amenée (54') de la fraction liquide à réchauffer sont mis en communication avec les moyens d'évacuation (52) de la fraction liquide refroidie.

8. Installation selon l'une des revendications 5 à 7, caractérisée en ce les échangeurs de chaleur (50, 56) sont de type à contre-courant.

## Patentansprüche

1. Verfahren zur Versorgung einer Luftzerlegungseinheit (14) mittels einer Gasturbine (2), bei dem (über 16) Einlassluft in einen Eingang der Luftzerlegungseinheit (14) zugeführt wird, (über 16) mindestens eine Fraktion der Einlassluft aus der Gasturbine (2) bereitgestellt wird, aus der Zerlegungseinheit (16) mindestens ein (über 20, 24) mit Stickstoff angereicherter gasförmiger Strom abgezogen wird, dieser mit Stickstoff angereicherte gasförmige Strom aufgeheizt wird, **dadurch gekennzeichnet, dass**, um den mit Stickstoff angereicherten gasförmigen Strom aufzuheizen, in einem ersten Austauscher (56) die aus der Gasturbine (2) stammende Einlassluftfraktion und eine aufzuheizende Wasserfraktion (54; 54') in eine wärmeaustauschende Beziehung gebracht werden, um eine aufgeheizte Wasserfraktion (58) zu erhalten, dieser aufgeheizten Wasserfraktion (58) eine Mischwasserfraktion (48) zugegeben wird, um eine abzukühlende Wasserfraktion (60) zu erhalten, in einem zweiten Austauscher (50) diese abzukühlende Wasserfraktion (60) und der mit Stickstoff angereicherte gasförmige Strom in eine wärmeaustauschende Beziehung gebracht werden, mindestens ein Teil der Mischwasserfraktion (48) aus dem Ausgang eines Kessels (38) bereitgestellt wird, mindestens ein Teil der in dem zweiten Austauscher (50) abgekühlten Wasserfraktion (52) zu dem Eingang des Kessels (38) zurückgeleitet wird.

2. Versorgungsverfahren nach Anspruch 1, **dadurch gekennzeichnet, dass** dieser Kessel (38) mittels der Gasturbine (2) (über 36) mit Energie versorgt wird.

3. Versorgungsverfahren nach Anspruch 1, **dadurch gekennzeichnet, dass** mindestens ein Teil der in dem zweiten Austauscher (50) abgekühlten flüssigen Fraktion (52) (über 54') zu dem Eingang des ersten Austauschers (56) zurückgeleitet wird.

4. Versorgungsverfahren nach einem der vorhergehenden Ansprüche, **dadurch gekennzeichnet, dass** die aufzuheizende flüssige Fraktion (54; 54') und die aus der Gasturbine (2) stammende Einlassluftfraktion sowie die abzukühlende flüssige Fraktion (60) und der mit Stickstoff angereicherte gasförmige Strom im Gegenstrom in eine wärmeaustauschende Beziehung gebracht werden.

5. Anlage zur Versorgung einer Luftzerlegungseinheit (14) mittels einer Gasturbine (2), umfassend eine Gasturbine (2) mit Mitteln zur Bereitstellung von Druckluft, insbesondere einen Kompressor (4), eine Luftzerlegungseinheit (14), die Mittel zur Versorgung (16) mit Einlassluft umfasst, die mindestens erste Versorgungsmittel (16) in Verbindung mit den Bereitstellungsmitteln (4) der Gasturbine (2) aufweist, sowie Mittel zum Abführen (20, 24) mindestens eines mit Stickstoff angereicherten gasförmiges Stroms, wobei diese Anlage ferner Mittel zum Aufheizen des mit Stickstoff angereicherten gasförmiges Stroms umfasst, **dadurch gekennzeichnet, dass** diese Aufheizmittel Folgendes umfassen: einen ersten Wärmeaustauscher (56), in dem die ersten Mittel (16) zur Versorgung mit Einlassluft, Mittel zum Zuführen (54; 54') einer aufzuheizenden Wasserfraktion, die am Eingang des ersten Austauschers (56) münden, Mittel zum Abführen (58) einer aufgeheizten Wasserfraktion, die mit dem Ausgang des ersten Austauschers in Verbindung stehen, umlaufen, einen zweiten Wärmeaustauscher (50), in dem die Mittel zum Abführen (20, 24) des mit Stickstoff angereicherten gasförmiges Stroms, Mittel zum Zuführen (60) einer abzukühlenden Wasserfraktion, die mit dem Ausgang des zweiten Austauschers in Verbindung stehen, und Mittel zum Abführen (52) einer abgekühlten Wasserfraktion, die mit dem Ausgang des zweiten Austauschers (50) in Verbindung stehen, umlaufen, und dass die Mittel zum Abführen (58) der aufgeheizten flüssigen Fraktion mit den Mitteln zum Zuführen (60) der abzukühlenden flüssigen Fraktion in Verbindung stehen und dass die Mittel zum Zuführen (60) der abzukühlenden flüssigen Fraktion mit einem Kessel (38) in Verbindung stehen und die Mittel zum Abführen (52) der abgekühlten flüssigen Fraktion mit dem Eingang des Kessels (38) in Verbindung stehen.

6. Anlage nach Anspruch 5, **dadurch gekennzeichnet, dass** Energieversorgungsmittel (36) vorgesehen sind, die sich zwischen der Gasturbine (2) und diesem Kessel (38) erstrecken.

7. Anlage nach Anspruch 5, **dadurch gekennzeichnet, dass** die Mittel zum Zuführen (54') der aufzuheizenden flüssigen Fraktion mit den Mitteln zum Abführen (52) der abgekühlten flüssigen Fraktion in Verbindung stehen.

8. Anlage nach einem der Ansprüche 5 bis 7, **dadurch gekennzeichnet, dass** die Wärmeaustauscher (50, 56) des Gegenstromtyps sind.

## Claims

1. Method for supplying an air separation unit (14) using a gas turbine (2), in which incoming air enters (via 16) an inlet of said separation unit (14), at least a fraction of said incoming air is supplied (via 16) from said gas turbine (2), at least one nitrogen-enriched gas stream is extracted (via 20, 24) from the separation unit (16), said nitrogen-enriched gas stream is heated, **characterised in that**, in order to heat the nitrogen-enriched gas stream, heat exchange occurs in a first heat exchanger (56) between the fraction of incoming air issuing from the gas turbine (2) and a water fraction to be heated (54; 54'), in order to obtain a heated water fraction (58), said heated water fraction (58) is added to a mixing water fraction (48), in order to obtain a water fraction to be cooled (60), and heat exchange occurs in a second heat exchanger (50) between said water fraction to be cooled (60) and the nitrogen-enriched gas stream, at least part of the mixing water fraction (48) is supplied from the outlet of a boiler (38), at least part of the water fraction (52) cooled in the second heat exchanger (50) is returned to the inlet of the boiler (38).

2. Supply method according to claim 1, **characterised in that** said boiler (38) is supplied with energy (via 36) using the gas turbine (2).

3. Supply method according to claim 1, **characterised in that** at least part of the liquid fraction (52) cooled in the second heat exchanger (50) is returned (via 54') to the inlet of the first heat exchanger (56).

4. Supply method according to any of the preceding claims, **characterised in that** counterflow heat exchange occurs between the liquid fraction to be heated (54; 54') and the incoming air fraction issuing from the gas turbine (2), and also between the liquid fraction to be cooled (60) and the nitrogen-enriched gas stream.

5. Installation for supplying an air separation unit (14) using a gas turbine (2), comprising a gas turbine (2) comprising compressed air supply means, in particular a compressor (4), an air separation unit (14) comprising incoming air supply means (16) comprising at least first supply means (16), which are connected to the supply means (4) of the gas turbine (2), as well as means (20, 24) for removing at least one nitrogen-enriched gas stream, said installation further comprising means for heating the nitrogen-enriched gas stream, **characterised in that** said heating means comprise a first heat exchanger (56), in which the first incoming air supply means (16) circulate, intake means (54; 54') for a water fraction to be heated, discharging at the inlet of the first heat exchanger (56), means (58) for removing a heated water fraction, which are brought into communication with the outlet of the first heat exchanger, a second heat exchanger (50) in which the means (20, 24) for removing the nitrogen-enriched gas stream circulate, intake means (60) for a water fraction to be cooled, which are brought into communication with the inlet of the second heat exchanger, and means (52) for removing a cooled water fraction, which are brought into communication with the outlet of the second heat exchanger (50), and **in that** the means (58) for removing the heated liquid fraction are brought into communication with the intake means (60) for the liquid fraction to be cooled, and **in that** the intake means for the liquid fraction to be cooled (60) are brought into communication with a boiler (38) and the means (52) for removing the cooled liquid fraction are brought into communication with the inlet of the boiler (38).

6. Installation according to claim 5, **characterised in that** energy supply means (36) are provided, which extend between the gas turbine (2) and said boiler (38).

7. Installation according to claim 5, **characterised in that** the intake means (54') for the liquid fraction to be heated are brought into communication with the means (52) for removing the cooled liquid fraction.

8. Installation according to any of claims 5 to 7, **characterised in that** the heat exchangers (50, 56) are of the counterflow type.
